# EUROPEAN PATENT APPLICATION

(11) **EP 0 530 154 A2**
(43) Date of publication of application: **03.03.1993**
(21) Application number: 92830284.3
(22) Date of filing: 02.06.1992
(51) Int. Cl.: A61C 3/025, B24C 7/00, F17D 5/02

(54) **A microsanding system**

(30) Priority: 19.06.1991 IT TO910465
(71) Applicant: C.I.E. DENTALFARM S.r.l., I-10138 Torino (IT)
(72) Inventor: Mini, Giorgio, I-10149 Torino (IT); Bertotti, Massimo, I-10078 Venaria (Torino) (IT)
(74) Representative: Rambelli, Paolo

(57) **Abstract**

A microsanding system for use in dental mechanics including pressurized abrasive powder container (12), a pipe (26) for supplying to a sanding nozzle (28) a mixture of compressed air and abrasive, a compressed air supply pipe (14), and a valve (V), the pressure or absence of compressed air operated by supply, which vents the container and the pipe to depressurize the system whenever compressed air supply is depressurized.

## Description

The present invention relates to a sanding system particularly for use in dental mechanics, of the type including at least one container for abrasive powder, the container being connected to a compressed-air supply pipe, with the interposition of a non-return valve, and to a pipe for discharging the compressed air and abrasive.

In sanding systems currently in use, the flow of air and abrasive is shut off by a solenoid valve which selectively puts the supply pipe into communication with a compressed-air supply (in the operative configuration of the sanding system) or discharges it. A device of elastomeric material for clamping the pipe which discharges the compressed air and abrasive operates in parallel with the solenoid valve to prevent the slow depressurisation of the container and the resulting transportation of abrasive through the microsanding nozzle, the diameter of which is reduced. In this known solution, because of the presence of the non-return valve in the compressed-air supply pipe (which is necessary to prevent abrasive powder from entering the valve which controls the supply), the abrasive container remains under pressure and there is also a high risk of the discharge pipe rupturing because of its repeated "constrictions" and its contact with the abrasive.

The object of the present invention is to provide a sanding system of the type specified at the beginning of the description which does not have the aforementioned disadvantages and which is easy and cheap to produce.

According to the invention, this object is achieved by virtue of the fact that the sanding system includes valve means for depressurising the container and the discharge pipe when the supply pipe is depressurised.

The device for restricting the discharge pipe (and its control solenoid valve) are thus eliminated, which simplifies the system and, to advantage, the operation of the valve means is controlled directly by the pressure of the air supply. The rapid depressurisation of the container prevents the formation of preferential pathways for the air which occur in systems of the prior art.

Preferably, the valve means comprise a pneumatic shut-off valve which is inserted in a vent pipe connected to the discharge pipe and is piloted by the air pressure in the supply pipe.

The valve means are considerably more reliable than the device for clamping or restricting the discharge pipe.

Further advantages and characteristics of the sanding system according to the present invention will become clear from the following detailed description which is provided purely by way of non-limiting example, with reference to the appended drawings, in which:
Figure 1 is a schematic view of a sanding system according to the present invention, and
Figure 2 is a longitudinal section of a detail of Figure 1.

With reference to the drawings, a microsanding system, generally indicated 10, for use in dental mechanics includes a plurality of containers 12 for abrasive powder A, which are connected to a compressed-air supply by supply pipes 14, with the interposition of a selector 16, a two-position pneumatic solenoid valve 18, and a control manometer 20. Each compressed-air supply pipe 14 is connected, with the interposition of a non-return valve 22, to a porous metal diffuser 24 in the bottom of the container which distributes the compressed air uniformly through the abrasive powder A. The compressed air and the powder A are discharged in a fluidised condition through a flexible discharge pipe 26, one end of which is connected to a sanding nozzle 28 operable, in a suitable microsanding chamber, by the operator.

Each discharge pipe 26 is connected at 30 to an auxiliary bypass pipe 32 which is connected to a pneumatic shut-off valve V at 34. Each shut-off valve V has a second, lateral connector 36 connected to a vent pipe 38 which opens into a device 40, described and illustrated in European patent application EP-A-0 379 472 for purifying the air containing the abrasive powder.

The pneumatic valve has a cup-shaped metal body 42 with a base wall 42a having an inner, projecting, circular portion 42b which defines, with a side wall 42c of the cup-shaped body, an annular cavity 44 which communicates with the vent pipe 38 through the connector 36. The cup-shaped body 42 also has an annular shoulder 46 which is at a level further from the base wall 42a than the projecting portion 42b and against which an edge region of a resilient diaphram 48 of elastomeric material is clamped by a disc-shaped closure element 50 and an annular spacer 53 interposed between the closure element 50 and the diaphragm 48. The resilient diaphragm 48 thus defines a first chamber A which communicates with the connectors 34 and 36 and a second chamber B which communicates with the compressed-air supply pipe by means of a central connecting hole 50a connected to an auxiliary pipe 52 in parallel with the pipe 14.

The microsanding system also includes a service nozzle C and a pneumatic solenoid valve D for sending compressed air to the purifying device 40.

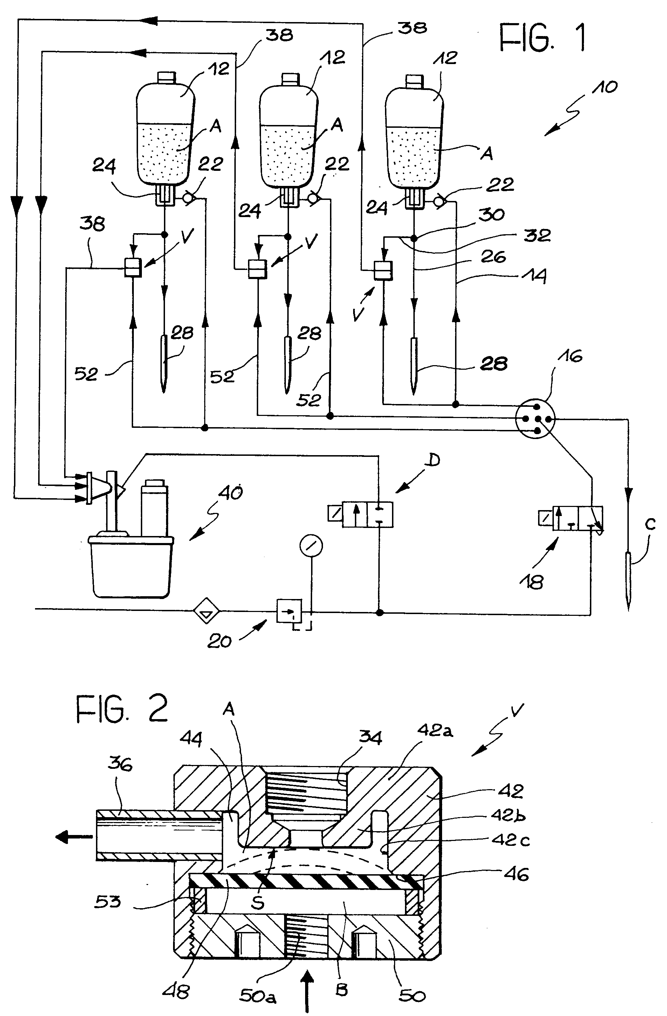

In the inoperative configuration of the microsanding system 10, the solenoid valve 18 discharges the compressed-air supply pipes 14 (Figure 1). In this configuration, the resilient diaphgrams 48 of the pneumatic valves V assume the flat configuration, shown by continuous lines in Figure 2, so that the containers 12 can be depressurised through the vent pipes 38.

When the solenoid valve 18 is moved, for example, by the operator by means of a pedal, to the configuration in which the compressed air can pass through it, the pressurisation of the auxiliary pipe 52 causes the diaphragm 48 to bend (as shown by the broken lines in Figure 2) so as to close the valve seat S defined by the connector 34 and the projecting portion 42b of the cup-shaped body 42 of the valve. In this configuration, the compressed air also fluidises the abrasive A and transports it through the discharge pipe 26 towards the respective microsanding nozzle 28. When the solenoid valve 18 is next discharged, the diaphragm 48 instantaneously moves away from the valve seat 5 by virtue of the depressurisation of the second chamber B so that the container 12 can be depressurised rapidly through the vent pipe 38.

It is clear from the foregoing description that the system is safer than the systems of the prior art (the containers are not permanently pressurised, eliminating the causes of ruptures of the flexible pipes) and there is less wastage of abrasive powder.

Naturally, it is intended that, the principle of the invention remaining the same, the details of construction and forms of embodiment may be varied widely with respect to those described and illustrated in the drawings, without thereby departing from the scope of the present invention.

## Claims

1. A sanding system, particularly for use in dental mechanics, of the type including at least one container (12) for abrasive powder (A), the container being connected to a compressed-air supply pipe (14), with the interposition of a non-return valve (22), and to a pipe (26) for discharging the compressed air and abrasive, characterised in that it includes valve means (V) for depressurising the container (12) and the discharge pipe (26) when the supply pipe is depressurised (14).

2. A system according to Claim 1, characterised in that the valve means comprise a pneumatic shut-off valve (V) which is inserted in a vent pipe (32, 38) connected to the discharge pipe (26) and is piloted by the air pressure in the supply pipe (14, 52).

3. A system according to Claim 2, characterised in that the pneumatic valve (V) includes a hollow body (42) which is divided into two portions (A, B) by a resilient diaphragm obturator (48), a first portion (A) having a first connector (34) which is connected to the discharge pipe (26) and defines a valve seat (S) in the hollow body (42) for the diaphragm obturator (48) and a second connector (36) which is connected to the vent pipe (38), and a second portion (B) being connected to the compressed-air supply pipe (14).

4. A system according to Claim 3, characterised in that the pneumatic valve (V) includes a body (42), the base (42a) of which defines the valve seat (S) and which has an annular shoulder (46) against which an edge region of the diaphragm (48) is clamped by a plug-like closure element (50) fitted in the cup-shaped body (42).

5. A system according to Claim 4, characterised in that an annular spacer element (52) is interposed between the annular shoulder (46) of the cup-shaped body (42) and the plug-like closure element (50).

6. A system according to any one of the preceding claims, having containers (12) connected to respective compressed-air supply pipes (14), characterised in that it includes a selector valve (16) interposed between the pipes (14) and a compressed-air supply for selectively putting the supply into communication with one of the compressed-air supply pipes (14).

7. A pneumatic shut-off valve, particularly for use in sanding systems for use in dental mechanics, characterised in that it includes:
- a cup-shaped body (42) having a base wall (42a) with an inner projecting portion (42b) which defines an annular cavity (44) with the inner wall (42c) of the body (42),
- a first connector (34) in the centre of the base wall (42a) for connection to a pipe in which the flow is to be shut off,
- a second, lateral connector (36) substantially in correspondence with the cavity (44) for connection to a vent pipe,
- an annular shoulder (46) on the inner wall (42c) of the cup-shaped body (42) at a level further from the base wall (42a) of the body (42) than the projecting portion (42b),
- a diaphragm (48) of elastomeric material which is clamped against the annular shoulder (46) and is adapted to act as an obturator and to cooperate with a valve seat (S) defined by the projecting portion (42b) of the base wall (42a), and
- a disc-shaped element (50) for closing the cup-shaped element (42) and clamping the diaphragm (48), with the interposition of an annular spacer (53), so as to define a pressurisation chamber (B) for the control of the diaphragm.
